# EUROPÄISCHE PATENTSCHRIFT

(11) **EP 3 994 841 B1**
(45) Veröffentlichungstag und Bekanntmachung des Hinweises auf die Patenterteilung: **08.04.2026**
(21) Anmeldenummer: 20735390.5
(22) Anmeldetag: 30.06.2020
(51) Int. Cl.: H04L 9/08, H04L 9/32, H04L 9/40, G06F 21/33

(54) **SYSTEM UND VERFAHREN ZUR AUTHENTIFIZIERUNG AN EINEM GERÄT**
SYSTEM AND METHOD FOR AUTHENTICATION ON A DEVICE
SYSTÈME ET PROCÉDÉ D'AUTHENTIFICATION SUR UN APPAREIL

(30) Priorität: 04.07.2019 DE 102019209888
(43) Veröffentlichungstag der Anmeldung: 11.05.2022
(73) Patentinhaber: BSH Hausgeräte GmbH, 81739 München (DE)
(72) Erfinder: GOTTSCHALK, Richard, 93053 Regensburg (DE); REHBERG, Andreas, 93152 Nittendorf (DE)
(86) Internationale Anmeldenummer: PCT/EP2020/068329
(87) Internationale Veröffentlichungsnummer: WO 2021/001334

(56) Entgegenhaltungen:
- EP-A1- 3 474 172
- US-A- 5 982 898
- US-A1- 2002 056 747

## Beschreibung

Die Erfindung betrifft ein System und ein Verfahren, die eine zuverlässige Authentifizierung eines Nutzers an einem Gerät ermöglichen, auch dann, wenn das Gerät nicht mit einem Authentifizierungs-Server kommunizieren kann.

Ein loT (Internet of Things) Gerät ist typischerweise über das Internet mit einem Server verbunden. Ein Nutzer des loT Geräts (z.B. ein Service Techniker) kann sich an dem loT Gerät authentifizieren, wobei die Überprüfung der Authentizität dabei meist unter Einbindung eines Authentifizierungs-Servers erfolgt. Eine Authentifizierung kann z.B. erforderlich sein, um nicht-autorisierte Eingriffe an dem loT Gerät zu unterbinden. US 2002/056747 A1 beschreibt Ansätze des Authentifizierens an einem Server oder Benutzergerät. Der Stand der Technik umfasst des Weiteren EP 3474172 A1.

Wenn die Internetverbindung eines loT Geräts unterbrochen oder nicht vorhanden ist, so kann meist keine zuverlässige und sichere Authentifizierung erfolgen (da nicht auf den Authentifizierungs-Server zugegriffen werden kann). Das vorliegende Dokument befasst sich mit der technischen Aufgabe, auch dann eine sichere und zuverlässige Authentifizierung an einem Gerät zu ermöglichen, wenn das Gerät nicht über eine Kommunikationsverbindung mit einem Authentifizierungs-Server verbunden ist.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Verfahren zur Authentifizierung (eines Nutzers und/oder einer Computereinheit) an einem Gerät beschrieben. Das Gerät, insbesondere das loT Gerät, ist bevorzugt ein Hausgerät, insbesondere eine Waschmaschine, ein Trockner, eine Küchenmaschine, ein Herd, ein Ofen, ein Kühlschrank und/oder eine Spülmaschine.

Das Verfahren umfasst das Bereitstellen und/oder das Empfangen eines Zertifikats. Dabei kann das Zertifikat von einem (Zertifikat-) Server bereitgestellt werden, der für die Verwaltung von Zugriffen auf das Gerät zuständig ist. Der Server kann z.B. von einem Hersteller des Geräts zur Verfügung gestellt werden. Dabei kann neben dem Zertifikat (aktuelle) Information in Bezug auf das Gerät von dem Server bereitgestellt werden (z.B. in Bezug auf den aktuellen Zustand des Geräts). Durch die bereitgestellte Information kann die Güte eines anschließenden Zugriffs auf das Gerät erhöht werden.

Um ein Zertifikat zu beziehen, kann zunächst ein Server-Authentifizierungsvorgang an dem Server durchgeführt werden, um die Einheit (z.B. eine Computereinheit und/oder einen Nutzer), die das Zertifikat von dem Server beziehen will, zu authentifizieren. Das Zertifikat kann (ggf. ausschließlich) nach einem erfolgreichen Server-Authentifizierungsvorgang von dem Server bereitgestellt werden.

Das (von dem Server bereitgestellte) Zertifikat ermöglicht eine begrenzte Anzahl N von Authentifizierungsvorgängen. Dabei liegt die Anzahl N von möglichen Authentifizierungsvorgängen des Zertifikats bei Bereitstellung des Zertifikats durch den Server bevorzugt zwischen 2 und 10. Durch eine Begrenzung der Authentifizierungsvorgänge, die durch ein Zertifikat ermöglicht werden, kann ein hoher Grad an Sicherheit gewährleistet werden (auch bei einem Verlust des Zertifikats). Zusätzlich kann das Zertifikat auch auf eine bestimmte Zeitdauer begrenzt sein.

Das Verfahren umfasst ferner das Durchführen eines Authentifizierungsvorgangs an dem Gerät (unter Verwendung des Zertifikats). Im Rahmen des Authentifizierungsvorgangs kann von der Einheit, die sich an dem Gerät authentifizieren möchte, eine Challenge (z.B. eine Zufallszahl) empfangen werden, die von dem Gerät gesendet wurde. Des Weiteren kann von der Einheit eine Antwort auf die Challenge erzeugt werden, wobei die Antwort von der Challenge und von dem Zertifikat abhängt. Die Antwort kann dann an das Gerät gesendet werden, und das Gerät kann auf Basis der Antwort die Einheit authentifizieren oder die Authentifizierungsanfrage ablehnen.

Außerdem umfasst das Verfahren das Reduzieren der Anzahl N von noch möglichen Authentifizierungsvorgängen des Zertifikats. Insbesondere kann mit jedem Authentifizierungsvorgang, bei dem das Zertifikat verwendet wird, die Anzahl N (um jeweils eins) reduziert werden. So kann eine nichtzulässige Authentifizierung an einem Gerät sicher unterbunden werden (auch dann, wenn keine Kommunikationsverbindung zwischen dem Gerät und einem Authentifizierungs-Server besteht).

Das Zertifikat kann ausgebildet sein, es einem Nutzer des Zertifikats zu ermöglichen, im Anschluss an einen erfolgreichen Authentifizierungsvorgang auf das Gerät zuzugreifen. Dabei kann das Zertifikat ausgebildet sein, den Zugriff auf eine Teilmenge von Zugriffrechten aus einer Gesamtmenge von Zugriffsrechten zu begrenzen. Die Teilmenge von Zugriffsrechten kann dabei von einem Nutzertyp des Nutzers abhängen (z.B. ein Verwender des Geräts oder Servicepersonal für das Gerät und/oder ein Entwickler des Geräts).

Das Verfahren kann umfassen, Ermitteln eines Nutzertyps aus einer Mehrzahl von unterschiedlichen Nutzertypen. Es kann daraufhin ein Zertifikat bereitgestellt und/oder empfangen werden, das ein oder mehrere von dem ermittelten Nutzertyp abhängige Zugriffsrechte auf das Gerät ermöglicht. So kann die Sicherheit des Zugriffs auf ein Gerät weiter erhöht werden.

Das Verfahren kann umfassen, Überprüfen, im Rahmen des Authentifizierungsvorgangs, ob die Anzahl N von noch möglichen Authentifizierungsvorgängen größer als Null ist. Der Authentifizierungsvorgang an dem Gerät kann (automatisch) abgelehnt werden, wenn ermittelt wird, dass die Anzahl N von noch möglichen Authentifizierungsvorgängen nicht größer als Null ist. So kann zuverlässig die Gültigkeit des Zertifikats begrenzt werden.

Das Zertifikat wird auf einem Hardware-Sicherheitsmodul (d.h. auf einem hardware security module, HSM) bereitgestellt. So kann eine zuverlässige Aufbewahrung des Zertifikats ermöglicht werden.

Die Anzahl N von noch möglichen Authentifizierungsvorgängen wird dabei mittels eines Zählers des Hardware-Sicherheitsmoduls reduziert, um eine besonders zuverlässige Begrenzung der Gültigkeit des Zertifikats zu ermöglichen.

Das Verfahren kann insbesondere darauf ausgelegt sein, eine Computereinheit an dem Gerät zu authentifizieren. Der Zugriff auf das Zertifikat (für einen Authentifizierungsvorgang) wird über eine Kommunikationsschnittstelle (z.B. über eine USB Schnittstelle) zwischen der Computereinheit und dem Hardware-Sicherheitsmodul ermöglicht. So kann das Zertifikat in zuverlässiger und komfortabler Weise nutzbar gemacht werden.

Gemäß einem weiteren Aspekt der Erfindung wird ein System zur Authentifizierung (eines Nutzers oder einer Computereinheit) an einem Gerät beschrieben. Das System ist ausgebildet, ein Zertifikat bereitzustellen, wobei das Zertifikat eine begrenzte Anzahl N von Authentifizierungsvorgängen ermöglicht. Des Weiteren ist das System ausgebildet, einen Authentifizierungsvorgang an dem Gerät durchzuführen (unter Verwendung des Zertifikats) und die Anzahl N von noch möglichen Authentifizierungsvorgängen des Zertifikats zu reduzieren.

Es ist zu beachten, dass jegliche Aspekte des in diesem Dokument beschriebenen Systems und/oder Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein Blockdiagramm eines Systems zur Authentifizierung eines Nutzers an einem Gerät;
- Figur 2: einen beispielhaften Ablauf eines Authentifizierungsvorgangs an einem Gerät; und
- Figur 3: ein Ablaufdiagramm eines beispielhaften Verfahrens zur Authentifizierung an einem Gerät.

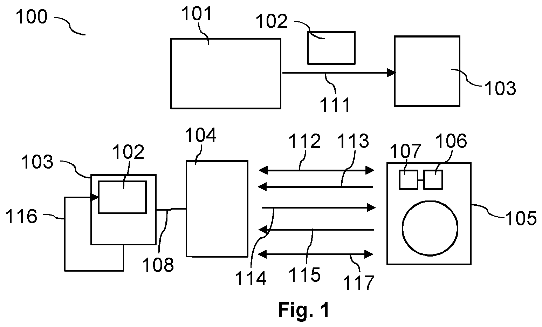

Wie eingangs dargelegt, befasst sich das vorliegende Dokument mit der effizienten und sicheren Authentifizierung eines Nutzers bzw. der Computereinheit eines Nutzers an einem Gerät. In diesem Zusammenhang zeigt Fig. 1 ein System 100 zur Authentifizierung an einem Gerät 105, insbesondere an einem Hausgerät. Das System 100 umfasst ein Hardware Security Module (HSM) 103, das ausgebildet ist, ein Zertifikat 102 von einem Authentifizierungs-Server 101 zu empfangen (Schritt 111 in Fig. 1). Das Zertifikat 102 kann dabei den Zugriff auf ein bestimmtes Gerät 105 und/oder auf eine bestimmte Gruppe von Geräten 105 ermöglichen. Des Weiteren kann das Zertifikat 102 den Umfang der Aktivitäten definieren, die im Rahmen eines Zugriffs auf ein Gerät 105 ausgeführt werden können.

Das Zertifikat 102 umfasst eine bestimmte (maximale) Nutzungsanzahl, wobei die Nutzungsanzahl anzeigt, wie häufig bzw. wie viele Male das Zertifikat 102 zur Authentifizierung an einem Gerät 105 genutzt werden kann und/oder darf.

Das Zertifikat 102 kann in dem HSM 103 gespeichert werden. Das HSM 103 kann von einem Nutzer über eine Schnittstelle 108 (z.B. über USB) an eine Computereinheit 104 (z.B. an ein Smartphone oder an einen Laptop-Computer) angeschlossen werden. Um einen Zugriff zu einem Gerät 105 zu ermöglichen, kann zwischen der Computereinheit 104 und dem Gerät 105 eine Kommunikationsverbindung 112 (z.B. Bluetooth und/oder WLAN) aufgebaut werden.

Das Gerät 105 kann über die Kommunikationsverbindung 112 eine Challenge 113 an die Computereinheit 104 senden. Die Challenge 113 kann z.B. eine Zufallszahl umfassen. Die Computereinheit 104 kann daraufhin die Challenge 113 anhand des Zertifikats (z.B. mittels eines in dem Zertifikat enthaltenen Passworts) ergänzen bzw. signieren. Auf Basis der signierten Challenge 113 kann dann eine Antwort 114 (d.h. eine Response) von der Computereinheit 104 an das Gerät 105 gesendet werden. Beispielsweise kann die signierte Challenge 113 verschlüsselt werden und/oder es kann eine Hashfunktion der signierten Challenge 113 gebildet und als Antwort 114 gesendet werden. Auf Basis der Antwort 114 kann das Gerät 105 die Computereinheit 104 authentifizieren oder eine Authentifizierung ablehnen. Ferner kann der Computereinheit 104 das Authentifizierungs-Ergebnis 115 mitgeteilt werden. Nach erfolgreicher Authentifizierung kann der Zugriff 117 auf das Gerät 105 ermöglicht werden.

Das Gerät 105 kann eine Kommunikationseinheit 107 umfassen, über die die Kommunikation mit der Computereinheit 104 erfolgt. Des Weiteren kann das Gerät 105 eine Steuereinheit 106 umfassen, die eingerichtet ist, die Antwort 114 auszuwerten, um eine Computereinheit 104 zu authentifizieren.

Das HSM 103 ist ausgebildet, für jeden Authentifizierungsvorgang die verbleibende Nutzungsanzahl des Zertifikats 102 zu reduzieren (Schritt 116). Des Weiteren kann das HSM 103 eingerichtet sein, eine weitere Nutzung des Zertifikats 102 für Authentifizierungszwecke zu unterbinden, wenn die verbliebende Nutzungsanzahl des Zertifikats 102 Null ist. Alternativ oder ergänzend kann das Gerät 105 ausgebildet sein, die Nutzungsanzahl eines Zertifikats 102 zu aktualisieren. Des Weiteren kann das Gerät 105 eingerichtet sein, die verbliebende Nutzungsanzahl bei einem Authentifizierungsvorgang zu überprüfen.

Im Folgenden wird ohne Einschränkung der Allgemeinheit ein Kundendiensteinsatz als Beispiel für einen Zugriff auf ein Gerät 105 beschrieben. Das in diesem Dokument beschriebene Verfahren zur Authentisierung an einem Gerät 105, insbesondere an einem Hausgerät, kann jedoch grundsätzlich von jeder beliebigen Person verwendet kann.

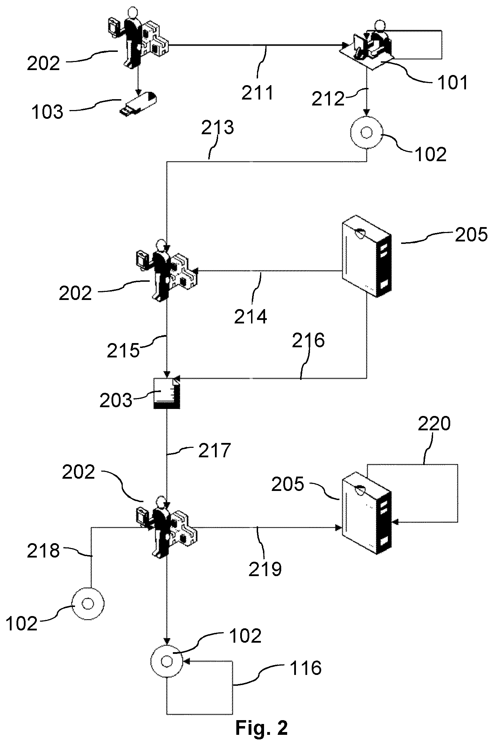

Der Nutzer 202 (siehe Fig. 2), der sich an dem Gerät 105 bzw. an dem Systemmaster SMM 205 des Geräts 105 authentifizieren möchte, verwendet ein HSM (Hardware Security Module) 103, ggf. als einzig erforderliche Hardware. Mit Hilfe eines (ggf. frei verfügbaren) Webservice kann der Nutzer 202 z.B. einen PC oder ein Smartphone nutzen, um sich gegenüber einem Backend-Server 101 zu authentifizieren. Durch Angabe und Nachweis spezifischer Informationen kann dabei ggf. zwischen verschiedenen Benutzergruppen unterschieden werden (z.B. Endnutzer, Kundendienst, Geräteentwickler, etc.). Der Nutzer kann entsprechend seiner Berechtigung ein digitales Zertifikat 102 erfragen (Schritt 211), z.B. um einen Kundendiensteinsatz an einem speziellen Gerät 105 oder an einer definierten Gruppe von Geräten 105 durchzuführen. Die Granulierung der Zugriffsrechte kann dabei von der Implementierung und/oder von Eigenschaften des Geräts 105 abhängen.

Von dem Backend-Server 101 kann in Abhängigkeit von den Eigenschaften des Nutzers 202 und/oder des Geräts 105 bzw. der Geräte-Gruppe ein digitales Zertifikat 102 erstellt werden (Schritt 212). Das digitale Zertifikat 102 kann mit Hilfe der vom HSM 103 bereitgestellten ein oder mehreren Techniken (z.B. "PKI-as-a-Service", "Device Issuer CA", "Build-In PKI" und/oder Secure Channel) sicher in dem HSM 103 abgelegt werden (Schritt 213). Dabei steht PKI für public key infrastructure und CA für certification authority.

Anfragen für ein Zertifikat 102, die nicht als plausibel gelten, können von dem Backend-Server 101 abgelehnt werden (z.B. eine zu hohe Anfrage von Zugriffen bzw. Zertifikaten an einem Tag). Ggf. können auch Anfragen von bekannten, nicht validen Nutzern abgelehnt werden, was z.B. ein effektives Zurückrufen (Revoken) von Zertifikaten 102 ermöglicht. Diese Funktionalität ist mit einer Implementierung ohne HSM 103 typischerweise nicht nachbildbar.

Wenn ein Zugriff auf ein Gerät 105 vollzogen werden soll, steckt der Nutzer das HSM 103 in eine Computereinheit 104 (z.B. in ein Smartphone mit einer USB OTG Schnittstelle). Eine Software APP auf der Computereinheit 104 kann eine End-to-End Kommunikation 112 zwischen dem HSM 103 und dem Gerät 105 ermöglichen (Schritt 214).

Nun weist der Nutzer seine Berechtigung mit dem Zertifikat 102 durch ein Challenge-Response Verfahren nach (Schritte 215, 216, 217, 219), wobei eine Zufallszahl (z.B. in Form eines Authentication Tokens) 203 des Gerätes 105 von einem privaten Schlüssel des im HSM 103 liegenden Zertifikats 102 signiert wird (Schritt 218). Der Zugriff kann durch die HSM Merkmale "Key Use Counter" und/oder "Key Restriction" beschränkt werden. Bei jeder Verwendung wird dabei ein interner Counter heruntergezählt (Schritt 116). Sobald der Wert des Counters bei 0 angekommen ist, kann kein weiterer Einsatz mehr mit dem installierten Zertifikat 102 getätigt werden. Das heißt, dass ein Verlust des HSM 103 nur eine begrenzte Auswirkung auf die Sicherheit hat.

Durch die Verwendung eines PIN Management kann die Sicherheit optional weiter erhöht werden.

Durch die in diesem Dokument beschriebenen Maßnahmen können die Handhabbarkeit verbessert und die Sicherheit erhöht werden. Des Weiteren kann dadurch, dass zeitnah vor einem Zugriff jeweils ein neues Zertifikat 102 von einem Backend-Server 101 bezogen werden muss, aktuelle Information zu einem Gerät 105 bereitgestellt werden, um den Zugriff auf das Gerät 105 zu verbessern. Beispielsweise kann Information zu vorhergehenden Zugriffen und/oder zu aktuellen SW- bzw. Firmware-Versionen für ein Gerät 105 übermittelt werden. Alternativ zu einem HSM 103, kann eine JavaCard kompatible NFC Smartcard verwendet werden, die die HSM relevanten Merkmale aufweist.

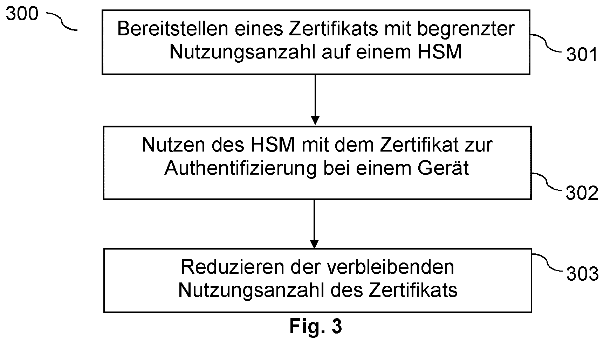

Fig. 3 zeigt ein Ablaufdiagramm eines beispielhaften Verfahrens 300 zur Authentifizierung (einer Einheit 104 und/oder eines Nutzers 202) an einem Gerät 105. Das Verfahren 300 kann durch ein System 100 und/oder durch eine Computereinheit 104 ausgeführt werden. Das Verfahren 300 umfasst das Bereitstellen 301 eines Zertifikats 102, wobei das Zertifikat 102 eine begrenzte Anzahl N von Authentifizierungsvorgängen ermöglicht (z.B. N>1 und/oder N<5, bei Auslieferung des Zertifikats 102).

Des Weiteren umfasst das Verfahren 300 das Durchführen 302 eines Authentifizierungsvorgangs an dem Gerät 105 unter Verwendung des Zertifikats 102. Ferner umfasst das Verfahren 300 das Reduzieren 303 der Anzahl N von noch möglichen Authentifizierungsvorgängen des Zertifikats 102. Mit jedem Authentifizierungsvorgang kann somit die Anzahl N von noch möglichen Authentifizierungsvorgängen des Zertifikats 102 (um jeweils eins) reduziert werden. So kann in effizienter und sicherer Weise der Zugriff auf ein Gerät 105 (bzw. auf eine Geräte-Gruppe) ermöglicht und/oder kontrolliert werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems und/oder des vorgeschlagenen Verfahrens veranschaulichen sollen.

## Patentansprüche

1. Verfahren (300) zur Authentifizierung an einem Gerät (105); wobei das Verfahren (300) umfasst,
- Bereitstellen (301) eines Zertifikats (102) auf einem Hardware-Sicherheitsmodul (103); wobei das Zertifikat (102) eine begrenzte Anzahl N von Authentifizierungsvorgängen ermöglicht;
- Durchführen (302) eines Authentifizierungsvorgangs an dem Gerät (105); und
Reduzieren (303) der Anzahl N von noch möglichen Authentifizierungsvorgängen des Zertifikats (102); wobei das Hardware-Sicherheitsmodul (103) von einem Benutzer über eine Schnittstelle (108) an eine Computereinheit (104) angeschlossen werden kann, **dadurch gekennzeichnet, dass** die Anzahl N von noch möglichen Authentifizierungsvorgängen mittels eines Zählers des Hardware-Sicherheitsmoduls (103) reduziert wird.

2. Verfahren (300) gemäß Anspruch 1; wobei das Verfahren (300) umfasst,
- Überprüfen, im Rahmen des Authentifizierungsvorgangs, ob die Anzahl N von noch möglichen Authentifizierungsvorgängen größer als Null ist; und
- Abweisen des Authentifizierungsvorgangs an dem Gerät (105), wenn ermittelt wird, dass die Anzahl N von noch möglichen Authentifizierungsvorgängen nicht größer als Null ist.

3. Verfahren (300) gemäß einem der vorhergehenden Ansprüche, wobei das Verfahren (300) umfasst,
- Ermitteln eines Nutzertyps aus einer Mehrzahl von unterschiedlichen Nutzertypen;
und
- Bereitstellen eines Zertifikats (102), das ein oder mehrere von dem Nutzertyp abhängige Zugriffsrechte auf das Gerät (105) ermöglicht.

4. Verfahren (300) gemäß einem der vorhergehenden Ansprüche, wobei das Verfahren (300) im Rahmen des Authentifizierungsvorgangs umfasst,
- Empfangen einer Challenge (113) von dem Gerät (105);
- Ermitteln einer Antwort (114) auf die Challenge (113); wobei die Antwort (114) von der Challenge (113) und von dem Zertifikat (102) abhängt; und
- Senden der Antwort (114) an das Gerät (105).

5. Verfahren (300) gemäß einem der vorangehenden Ansprüche, wobei
- das Verfahren (300) darauf ausgelegt ist, eine Computereinheit (104) an dem Gerät (105) zu authentifizieren; und
- das Verfahren (300) umfasst, Zugreifen auf das Zertifikat (102) über eine Kommunikationsschnittstelle zwischen der Computereinheit (104) und dem Hardware-Sicherheitsmodul (103).

6. Verfahren (300) gemäß einem der vorhergehenden Ansprüche, wobei das Zertifikat (102) von einem Server (101) bereitgestellt wird, der für eine Verwaltung von Zugriffen auf das Gerät (105) zuständig ist.

7. Verfahren (300) gemäß Anspruch 6, wobei das Verfahren (300) umfasst,
- Durchführen eines Server-Authentifizierungsvorgangs an dem Server (101), um eine Einheit, die das Zertifikat (102) von dem Server (101) beziehen will, zu authentifizieren; und
- Bereitstellen des Zertifikats (102) nach einem erfolgreichen Server-Authentifizierungsvorgang.

8. Verfahren (300) gemäß einem der Ansprüche 6 bis 7, wobei das Verfahren umfasst, Bereitstellen von Information in Bezug auf das Gerät (105) von dem Server (101) zusammen mit dem Zertifikat (102).

9. Verfahren (300) gemäß einem der vorhergehenden Ansprüche, wobei die Anzahl N von möglichen Authentifizierungsvorgängen des Zertifikats (102) bei Bereitstellung des Zertifikats (102) durch einen Server (101) zwischen 2 und 10 liegt.

10. Verfahren (300) gemäß einem der vorhergehenden Ansprüche, wobei das Gerät (105) ein Hausgerät, insbesondere eine Waschmaschine, ein Trockner, eine Küchenmaschine, ein Herd, ein Ofen, ein Kühlschrank und/oder eine Spülmaschine, ist.

11. Verfahren (300) gemäß einem der vorhergehenden Ansprüche, wobei
- das Zertifikat (102) ausgebildet ist, es einem Nutzer (202) des Zertifikats (102) zu ermöglichen, im Anschluss an einen erfolgreichen Authentifizierungsvorgang auf das Gerät (105) zuzugreifen; und
- das Zertifikat (102) ausgebildet ist, den Zugriff auf eine Teilmenge von Zugriffrechten aus einer Gesamtmenge von Zugriffsrechten zu begrenzen.

12. System (100) zur Authentifizierung an einem Gerät (105); wobei das System (100) ausgebildet ist,
- ein Zertifikat (102) auf einem Hardware-Sicherheitsmodul (103) bereitzustellen; wobei das Zertifikat (102) eine begrenzte Anzahl N von Authentifizierungsvorgängen ermöglicht;
- einen Authentifizierungsvorgang an dem Gerät (105) durchzuführen; und
die Anzahl N von noch möglichen Authentifizierungsvorgängen des Zertifikats (102) zu reduzieren; wobei das Hardware-Sicherheitsmodul (103) von einem Benutzer über eine Schnittstelle (108) an eine Computereinheit (104) angeschlossen werden kann, **dadurch gekennzeichnet, dass** die Anzahl N von noch möglichen Authentifizierungsvorgängen mittels eines Zählers des Hardware-Sicherheitsmoduls (103) reduziert wird.

## Claims

1. Method (300) for authentication on an appliance (105); wherein the method (300) comprises,
- providing (301) a certificate (102) on a hardware security module (103); wherein the certificate (102) permits a limited number N of authentication processes;
- implementing (302) an authentication process on the appliance (105); and reducing (303) the number N of still possible authentication processes of the certificate (102); wherein the hardware security module (103) can be connected to a computer unit (104) by a user by way of an interface (108), **characterised in that** the number N of still possible authentication processes is reduced by means of a counter of the hardware security module (103).

2. Method (300) according to claim 1; wherein the method (300) comprises,
- checking, within the scope of the authentication process, whether the number N of still possible authentication processes is greater than zero; and
- rejecting the authentication process on the appliance (105), if it is determined that the number N of still possible authentication processes is not greater than zero.

3. Method (300) according to one of the preceding claims, wherein the method (300) comprises,
- determining a user type comprising a plurality of different user types; and
- providing a certificate (102), which permits one or more access rights, dependent on the user type, to the appliance (105).

4. Method (300) according to one of the preceding claims, wherein, within the scope of the authentication process, the method (300) comprises
- receiving a challenge (113) from the appliance (105);
- determining a response (114) to the challenge (113); wherein the response (114) depends on the challenge (113) and on the certificate (102); and
- sending the response (114) to the appliance (105).

5. Method (300) according to one of the preceding claims, wherein
- the method (300) is designed to authenticate a computer unit (104) on the appliance (105); and
- the method (300) comprises accessing the certificate (102) by way of a communication interface between the computer unit (104) and the hardware security module (103).

6. Method (300) according to one of the preceding claims, wherein the certificate (102) is provided by a server (101), which is responsible for managing access to the appliance (105).

7. Method (300) according to claim 6, wherein the method (300) comprises,
- implementing a server authentication process on the server (101), in order to authenticate a unit, which wishes to obtain the certificate (102) from the server (101); and
- providing the certificate (102) following a successful server authentication process.

8. Method (300) according to one of claims 6 to 7, wherein the method comprises providing information in respect of the appliance (105) from the server (101) together with the certificate (102).

9. Method (300) according to one of the preceding claims, wherein, when the certificate (102) is provided by a server (101), the number N of possible authentication processes of the certificate (102) is between 2 and 10.

10. Method (300) according to one of the preceding claims, wherein the appliance (105) is a household appliance, in particular a washing machine, a dryer, a food processor, a cooker, an oven, a refrigerator and/or a washing machine.

11. Method (300) according to one of the preceding claims, wherein
- the certificate (102) is embodied to permit a user (202) of the certificate (102) to access the appliance (105) following a successful authentication process; and
- the certificate (102) is embodied to limit the access to a sub quantity of access rights from a total quantity of access rights.

12. System (100) for authenticating on an appliance (105); wherein the system (100) is embodied,
- to provide a certificate (102) on a hardware security module (103); wherein the certificate (102) permits a limited number N of authentication processes;
- to implement an authentication process on the appliance (105); and to reduce the number N of still possible authentication processes of the certificate (102), wherein the hardware security module (103) can be connected to a computer unit (104) by a user by way of an interface (108), **characterised in that** the number N of still possible authentication processes is reduced by means of a counter of the hardware security module (103).

## Revendications

1. Procédé (300) d'authentification sur un appareil (105), dans lequel le procédé (300) comprend :
- la fourniture (301) d'un certificat (102) sur un module de sécurité matériel (103), dans lequel le certificat (102) autorise un nombre limité N de processus d'authentification,
- l'exécution (302) d'un processus d'authentification sur l'appareil (105), et la réduction (303) du nombre N de processus d'authentification encore possibles du certificat (102),
dans lequel le module de sécurité matériel (103) peut être connecté par un utilisateur à une unité informatique (104) via une interface (108),
**caractérisé en ce que** le nombre N de processus d'authentification encore possibles est réduit au moyen d'un compteur du module de sécurité matériel (103).

2. Procédé (300) selon la revendication 1, dans lequel le procédé (300) comprend :
- la vérification, dans le cadre du processus d'authentification, si le nombre N de processus d'authentification encore possibles est supérieur à zéro, et
- le rejet du processus d'authentification sur l'appareil (105), lorsqu'il est déterminé que le nombre N de processus d'authentification encore possibles n'est pas supérieur à zéro.

3. Procédé (300) selon l'une des revendications précédentes, dans lequel le procédé (300) comprend :
- la détermination d'un type d'utilisateur parmi une pluralité de types d'utilisateur différents, et
- la fourniture d'un certificat (102), qui octroie un ou plusieurs droits d'accès à l'appareil (105) en fonction du type d'utilisateur.

4. Procédé (300) selon l'une des revendications précédentes, dans lequel le procédé (300) comprend, dans le cadre du processus d'authentification :
- la réception d'un défi (113) provenant de l'appareil (105),
- la détermination d'une réponse (114) au défi (113), dans lequel la réponse (114) dépend du défi (113) et du certificat (102), et
- l'envoi de la réponse (114) à l'appareil (105).

5. Procédé (300) selon l'une des revendications précédentes, dans lequel :
- le procédé (300) est adapté pour authentifier une unité informatique (104) sur l'appareil (105), et
- le procédé (300) comprend l'accès au certificat (102) par l'intermédiaire d'une interface de communication entre l'unité informatique (104) et le module de sécurité matériel (103).

6. Procédé (300) selon l'une des revendications précédentes, dans lequel le certificat (102) est fourni par un serveur (101), qui assure une gestion des accès à l'appareil (105).

7. Procédé (300) selon la revendication 6, dans lequel le procédé (300) comprend :
- l'exécution d'un processus d'authentification par serveur sur le serveur (101) pour authentifier une unité, qui souhaite obtenir le certificat (102) du serveur (101), et
- la fourniture du certificat (102) après un processus d'authentification par serveur réussi.

8. Procédé (300) selon l'une des revendications 6 à 7, dans lequel le procédé comprend la fourniture d'informations concernant l'appareil (105) par le serveur (101) conjointement au certificat (102).

9. Procédé (300) selon l'une des revendications précédentes, dans lequel le nombre N de processus d'authentification possibles du certificat (102) lors de la fourniture du certificat (102) par un serveur (101) est entre 2 et 10.

10. Procédé (300) selon l'une des revendications précédentes, dans lequel l'appareil (105) est un appareil électroménager, en particulier un lave-linge, un sèche-linge, un robot culinaire, une cuisinière, un four, un réfrigérateur et/ou un lave-vaisselle.

11. Procédé (300) selon l'une des revendications précédentes, dans lequel :
- le certificat (102) est conçu pour permettre à un utilisateur (202) du certificat (102) d'accéder à l'appareil (105) au terme d'un processus d'authentification réussi, et
- le certificat (102) est conçu pour limiter l'accès à une partie des droits d'accès parmi une totalité de droits d'accès.

12. Système (100) d'authentification sur un appareil (105), dans lequel le système (100) est configuré pour :
- fournir un certificat (102) sur un module de sécurité matériel (103), dans lequel le certificat (102) autorise un nombre N limité de processus d'authentification,
- exécuter un processus d'authentification sur l'appareil (105), et
- réduire le nombre N de processus d'authentification encore possibles du certificat (102),
dans lequel le module de sécurité matériel (103) peut être connecté par un utilisateur à une unité informatique (104) via une interface (108),
**caractérisé en ce que** le nombre N de processus d'authentification encore possibles est réduit au moyen d'un compteur du module de sécurité matériel (103).
